# EUROPEAN PATENT APPLICATION

(11) **EP 3 403 726 A2**
(43) Date of publication of application: **21.11.2018**
(21) Application number: 18170311.7
(22) Date of filing: 22.05.2013
(51) Int. Cl.: B03D 1/01, B01D 19/04

(54) **FOAM PREVENTION IN THE REVERSE FLOTATION PROCESS FOR PURIFYING CALCIUM CARBONATE**

(30) Priority: 30.06.2012 EP 12004894
(62) Divisional of application: 13724171.7
(71) Applicant: Clariant International Ltd, 4132 Muttenz (CH); Clariant S.A., 04795-900 Sao Paulo, SP (BR)
(72) Inventor: DILSKY, Stefan, 97218 Gerbrunn (DE); DA SILVA, Wagner Claudio, ZIP 05734-150 São Paulo-SP (BR); SPECK CASSOLA, Monica, 04741-100 Sao Paulo--SP (BR); BARTALINI, Nilson Bar, 04279-030 Sao Paulo - SP (BR); DUARTE, Zaire Guimaraes, 09271-720 Sao Paulo (BR); ARIAS MEDINA, Jorge Antonio, Forest Hill, VIC, 3131 (AU); DE OLIVEIRA FILHO, Antonio Pedro, CEP 04671 090 Sao Paulo SP (BR)
(74) Representative: Mikulecky, Klaus

(57) **Abstract**

This invention relates to an composition, comprising
A) at least one quaternary ammonium compound which is a collector for the reverse flotation of magnesium minerals from calcium carbonate
B) at least one antifoam agent
C) a solvent
and its use in the reverse flotation of calcium carbonate.

## Description

Object of this invention is an improved process for purifying calcium carbonate from silicate-magnesium mineral as impurity. The use of quaternary ammonium compound as collector in this process is well known. However, besides their collector function, quaternary ammonium compounds produce stable foam, what is undesirable for the next mineral processing step. This invention provides a new low foam composition comprising an antifoam compound and a quaternary ammonium compound used in a reverse flotation process for purifying calcium carbonate from silicate-magnesium impurities. The composition of the present invention is able to float said impurity mineral without producing undesirable foam.

The present invention describes a process for purifying calcium carbonate ore containing magnesium silicate mineral as impurity. Such magnesium silicates are for example the minerals of the biotite group, such as flogopite and micas. The inventive process uses a reverse froth flotation, in which the magnesium silicate gangue mineral is floated and a concentrate containing calcium carbonate remains in the bottom of the flotation cell.

The purified calcium carbonate, depleted from silicate-magnesium mineral, is used as raw material, particularly in the cement industry. The cement industry needs a calcium carbonate with a low MgO grade in order to avoid the reaction between MgO and water (hydration). The Mg(OH)₂ (hydrate compound) has a higher volume than MgO and its volume increase weakens the cement after hardening. The calcium carbonate purified by the inventive process is a calcium carbonate with a low MgO content and a high CaO-mass recovery.

In the froth flotation process, minerals are separated using air bubbles in water as vehicle. For the solid mineral particles to float, their surface must be made hydrophobic by using a collector. The mineral surface made hydrophobic adheres at the air bubbles and causes the particles to float. Thereby, a mineralized froth is formed at the top of the flotation cell. It is desired that the mineralized froth has a restricted degree of stability. It should be stable enough to overflow the cell without losing the attached solid particles, but it should break down after entering into the tailing dam.

The separation of calcium carbonate from impurities by reverse froth flotation is known in the art. Particularly, the use of quaternary ammonium compounds as collector in the calcium carbonate ore flotation is well known. Quaternary ammonium compounds used typically comprise a variety of chain lengths and saturation degrees of the hydrocarbon groups. Quaternary ammonium compounds are used in the present invention as collector to achieve the low magnesium oxide grade besides a high calcium oxide grade and high recovery.

US-4995965 discloses a process for purifying calcium carbonate ore containing silicate impurities using a collector of methyl-bis(2-hydroxypropyl) cocoammonium methyl sulfate.

US-5261539 discloses a reverse flotation process for purifying calcite ore, calcite rougher or calcite concentrated whereby finely ground particles thereof are contacted with a flotation agent and floated to remove quartz, micaceous minerals, chlorite, pyrite and other mineral impurities, the improvement which comprises using a flotation agent consisting essentially of a compound selected from the group consisting of an alkoxylated C₈-C₂₄-alkyl guanidine containing 1 - 10 alkoxy groups, an alkoxylated C₈-C₂₄-alkyl fatty amine containing 1 - 6 alkoxy group and mixtures thereof.

US-5720873 discloses a method of cleaning calcium carbonate ore containing silicate impurities in the presence of a quaternary ammonium compound and an alkylene oxide adduct of an amine compound and the weight ratio between the related products are 3:2 - 11:1.

EP-2012930 B1 discloses reverse froth flotation processes for treating a calcium carbonate are containing silicates using fatty-di-lower-alkyl benzyl quaternary ammonium compound, and di-fatty di-lower-alkyl quaternary ammonium compound.

The cited art does not address the problem of persisting froth.

The mineral-collector interactions strongly affect the degree of froth stabilization achieved. Apart from making the mineral particles hydrophobic, the collector also increases the bubbles' stability and, frequently, it is necessary to break down a persistent foam or froth generated in a froth flotation process by using defoamer agents.

The use of a defoamer after separation of the froth from the calcium carbonate however requires another step usually to be conducted outside of the flotation cell.

Hence, there is a continued need to optimize the reverse froth flotation process of purifying calcium carbonate ores, particularly by avoiding an additional step of froth breakdown. The foam formed should be stable enough to just float the impurity mineral particles out of the flotation cell and should break after being discharged from the flotation cell.

In addition, it is particularly important to achieve a magnesium oxide grade of 5.5 wt.-% or less, a high calcium oxide grade and high mass recovery in the flotation process product.

In the instantly described process for reverse flotation of calcium carbonate, antifoam is added together with the collector to avoid excessive foaming without affecting the mineral-collector interaction. The presence of stable foam or froth is prevented by avoiding the formation of stable air bubbles by using antifoam agents that do not affect the mineral-collector interaction. The expression antifoams herein is used for chemicals designed to prevent the formation of stable foam (herein also referred to as antifoam agents). In the state of the art such chemicals are also referred to as foam inhibitors. They are to be distinguished from defoamers which break the existing foam.

Antifoams are added together with the collector in order to prevent stable foam from forming. Antifoams act throughout the flotation cell to prevent excess foam generation and stability. There are different compounds that can be used as antifoam. Any chemical compound that has destabilizing effects on the foam is suitable as antifoam.

The use of antifoam agents reduces the amount of foam formed from the quaternary ammonium compounds during the flotation process. It is desired that the foam stability decreases after the flotation process. It is desired that any foam should be broken before pumping the flotation cell discharge to the tailing dam.

The instant invention therefore relates to a composition, comprising
A) at least one quaternary ammonium compound which is a collector for the reverse flotation of magnesium minerals from calcium carbonate,
B) at least one antifoam agent, and
C) at least one solvent.

This invention further relates to the use of the composition according to the invention as flotation reagent in the reverse flotation of magnesium silicate minerals from calcium carbonate ore.

This invention further relates to a process for reversely floating magnesium silicate minerals from calcium carbonate ore, the process comprising adding the inventive composition to a flotation cell containing magnesium silicate minerals and calcium carbonate ore in aqueous slurry, subsequently flowing air through the flotation cell and removing the magnesium silicate minerals together with the foam so generated.

The composition of the invention comprises at least one quaternary ammonium compound collector preferably in an amount of 20 to 60 wt.-%, in particular in the amount of 30 to 50 wt.-%, particularly preferred 35 to 45 wt.-%.

The amount of antifoam agent in the composition is preferably at most 25 wt.-%, particularly at most 20 wt.-%, more preferably at most 15 wt.-%. A preferred lower limit for the amount of antifoam agent is 5 wt.-%, more preferably 10 wt.-%.

The amount of solvent is preferably up to 75 wt.-%, more preferably 50 to 70 wt.-%, most preferable 55 to 65 wt.-%. In another preferred embodiment, the amount of solvent is the balance to 100 wt.-% from the combined amounts of collector and antifoam. Preferred solvents are water, ethanol, isopropanol, 2-ethylhexanol and paraffin, or mixtures thereof. The term "paraffin" means a liquid composition of hydrocarbons which are preferably saturated and aliphatic. Their solidification point is preferably below - 6 °C. The use of paraffin is particularly suitable in cases where the odor from alcohols is to be avoided.

In accordance with Ullmann's Encyclopedia of Industrial Chemistry, Foam and Foam Control, (2012) Wiley-VCH Verlag GmbH & Co. KGaA, Weinheim, antifoam agents are frequently used in the form of composites. The functional chemical compounds present in such composites which are used as antifoam agents can be divided into four categories:
1. Carrier oils
2. Active ingredients
3. Amphiphilic substances
4. Coupling and stabilizing agents

Carrier oils themselves have foam-control capability. They include water-insoluble paraffinic and naphthenic mineral oils, vegetable oils such as tall oil, castor oil, soybean oil or peanut oil, residues from the oxo alcohol synthesis, alkylbenzenes, and crude oils from the low-temperature carbonization of brown coal or other bituminous materials.

In the present invention carrier oils preferably are mineral oils (naphthenic, aromatic and paraffinic), alkyl benzenes, and vegetable oils, e.g. soy oil.
Preferred alkyl benzenes are reaction products from olefins and benzene by alkylation, olefin dimerization, benzene dialkylation, olefin diphenyl or benzene cycle addition.

Preferred alkyl benzenes are selected from the group consisting of alkyl benzenes (1), biphenyl alkanes (2), dialkyl benzenes (3), 1, 3-dialkylindanes (4) and 1,4-dialkyltetralines (5) according to the formulae 1 - 5 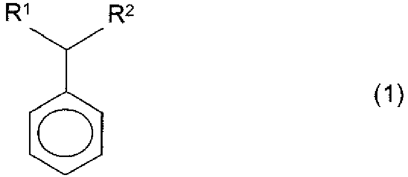 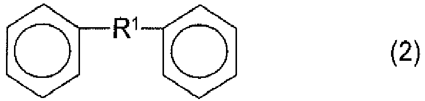 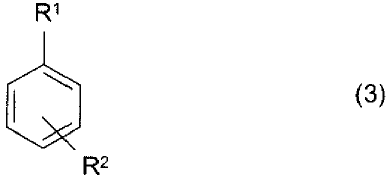 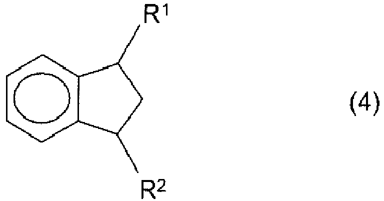 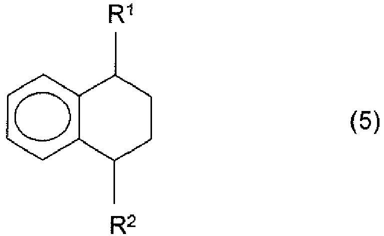 wherein
- R¹ and R²: are independently from each other hydrocarbon groups having from 1 to 30, particularly from 2 to 10 carbon atoms.

In one preferred embodiment, R¹ and/or R² is a saturated or unsaturated, branched or linear C₆ to C₃₀ aliphatic hydrocarbon group or a C₆ to C₃₀ aromatic hydrocarbon group. In another preferred embodiment, R¹ and R² are independently from each other alkyl groups with 1 to 30, preferably 2 to 10 carbon atoms, or C₁₀- to C₁₃-alkenyl groups.

The paraffinic and naphthenic mineral oils may be used in both functions, antifoam and coupling and stabilizing agent.

Active ingredients are compounds generally insoluble in the foaming medium and having surface active properties. An essential feature of an active ingredient is a low viscosity and a facility to spread rapidly on foamy surfaces. It has affinity to the air-liquid surface where it destabilizes the foam lamellas. This causes rupture of the air bubbles and breakdown of surface foam. Entrained air bubbles are agglomerated, and the larger bubbles rise to the surface of the bulk liquid more quickly.

There are some different classes of chemicals useful as active ingredients.

Silicone oils are particularly effective antifoaming agents because of their low surface tension, thermal stability, chemical inertness, and total water insolubility. By far the most important silicone oils are the dimethylpolysiloxanes, in which chain ends are saturated with trimethylsilyl groups. The number of siloxane units present ranges preferably from 2 to 2000.

In the case that dimethylpolysiloxanes by themselves show little foam-inhibiting activity with respect to aqueous surfactant solutions, they may be used in form of formulations supplemented with finely divided hydrophobic solid particles. These particles presumably confer the actual foam-inhibiting properties, while the silicone oil acts as hydrophobic carrier oil that offers unusually good spreading properties.

Hydrophobic Silica is another class of active ingredients. The normally hydrophilic silica is made hydrophobic e.g. by
1. spraying the silica with silicone oil and tempering at 250 - 350 °C,
2 treatment with organosilicon halide vapors in an autoclave, and
3. dispersing the silica in a silicone oil at elevated temperature and recovery of the solid by centrifugation.

Hydrophobic silica can also be produced by reacting silica hydrogel with alcohols, fatty amines, or wax. Amorphous, precipitated silica with a particle size of 1 - 2 µm is the most suitable starting material for foam-inhibiting agents.

Hydrophobic fats and waxes useful as active ingredients include the following materials:
1. fatty acid esters of monofunctional and polyfunctional alcohols;
2. fatty acid amides and sulfonamides;
3. paraffinic hydrocarbon waxes, ozokerite, and montan wax;
4. phosphoric acid mono-, di-, and triesters of fatty alcohols, in case of the triesters, also tributyl phosphate and tributoxyethyl phosphate have foam-inhibiting properties;
5. natural or synthetic fatty alcohols;
6. water-insoluble soaps of fatty acids, including aluminum stearate, calcium stearate, and calcium behenate;
7. perfluorinated fatty alcohols.

Unless noted otherwise, the terms "fatty" and "long chain" with respect to a carbon atom chain length, e.g. in a fatty acid or fatty alcohol, means a saturated or unsaturated straight chain of 6 to 30, preferably 8 to 24 carbon atoms.

A number of water-insoluble polymers may be used as active ingredients, including, fatty acid modified alkyl resins; novolaks; copolymers of vinyl acetate and long-chain maleic and fumaric acid diesters; and methyl methacrylate - vinylpyrrolidone copolymers. Other relevant polymeric materials include poly(propylene glycols) and propylene oxide adducts to glycerol, trimethylol-propane (1,1,1-tris(hydroxymethyl)propane), pentaerythritol, triethanolamine, dipentaerythritol, or polyglycerol.

Addition products of butylene oxide or long-chain a-epoxides with polyvalent alcohols show the same effects as propylene oxide polymers.

Molecular weights of such polymers may range from the lowest possible molecular weight (two units) up to 5000 g/mol, preferably 250 to 3000 g/mol, more preferably 400 to 1100 g/mol.

Amphiphilic substances are components with varying water solubility whose foam-inhibiting effects are due to a variety of mechanisms. Preferred as amphiphilic substances are nonionic surfactants, preferably ethoxylated fatty alcohols, fatty acids, rosin acids, fatty amines and alkylphenol derivatives with HLB values < 10.

In the present invention, amphiphilic substances used as antifoams are preferably alkoxylated fatty alcohols. Preferred alkoxylated fatty alcohols correspond to the formulae

R-O-(A-O)ₙ-H (6)

R-O-(A-O)ₙ-(B-O)ₘ-H (7)

wherein
- R: is a saturated or unsaturated, branched or linear C₆ to C₃₀ aliphatic hydrocarbon group or a C₆ to C₃₀ aromatic hydrocarbon group,
- n: is a number from 1 to 30, preferably a number from 2 to 10, and
- m: is a number from 1 to 30, preferably a number from 2 to 10, and
- A and B: are independently from each other C₂- to C₄-alkylene groups with the proviso that A is different from B.

In formulae (6) and (7), A is preferably a C₂-alkylene group and B is preferably a C₃- or C₄-alkylene group. R is preferably a C₈- to C₂₀-alkenyl group or a C₇- to C₂₀-alkylaryl group. Formula (6) denotes a polyoxyalkylene homopolymer or a polyoxyalkylene random copolymer. Formula (7) denotes a polyoxyalkylene block copolymer.

For the purpose of the instant invention the term antifoam comprises preferably the above-mentioned categories carrier oil, active ingredients and amphiphilic substances or mixtures thereof.

The collector of the instant invention is a quaternary ammonium compound. The quaternary ammonium compound of the present invention, in one preferred embodiment corresponds to the formula

[R¹R²R³R⁴N]⁺X⁻ (8)

wherein
- R¹, R², R³, and R⁴: independently are linear, branched, cyclic, saturated or unsaturated hydrocarbon groups, and
- X: is an anion.
- R¹, R², R³ and R⁴: preferably contain between 1 and 30, particularly 2 to 20 carbon atoms, provided that at least one of R¹, R², R³ and R⁴ contains from 6 to 20 carbon atoms. The sum of the number of carbon atoms in R¹, R², R³, and R⁴ preferably ranges from 9 to 35, particularly from 10 to 30. R¹, R², R³, and R⁴ may be alkyl, alkenyl, alkynyl, cycloalkyl or aryl groups.
- X: may be chloride, carbonate, bicarbonate, nitrate, bromide, acetate or carboxylate.

A preferred quaternary ammonium compound corresponds to the formula

[R¹(CH₃)₃N]⁺X⁻ (9)

wherein
- R¹: is a linear or branched C₆-C₂₀ saturated or unsaturated hydrocarbon group, such as an alkyl, alkenyl, or alkynyl group, and X is as defined above.
More preferably,
- R¹: is a linear C₆-C₁₈ saturated or unsaturated hydrocarbon group and
- X: is chloride, carbonate, or acetate.

Another preferred quaternary ammonium compound corresponds to the formula

[R¹R²(CH₃)₂N]⁺X⁻ (10)

wherein
- R¹: is a linear or branched C₆-C₂₀ saturated or unsaturated hydrocarbon group or a C₆-C₂₀ substituted aryl group, benzyl or an unsubstituted aryl group,
- R²: is a linear or branched C₁-C₂₀ saturated or unsaturated hydrocarbon group or C₆-C₂₀ substituted aryl group, benzyl or an unsubstituted aryl group, and
- X: is as defined above.

Preferably,
- R¹ and R²: independently are linear or branched C₈-C₁₆ saturated or unsaturated hydrocarbon groups. In a more preferred embodiment, R¹ and R² independently are linear or branched C₈-C₁₂ saturated or unsaturated hydrocarbon groups, and
- X: is chloride, carbonate, sulfate, or acetate.

The expression "substituted" as used herein means substitution with a C₁-C₄-alkyl group, unless defined otherwise.

Another preferred quaternary ammonium compound corresponds to the formula

[R¹R²(CH₃)₂N]⁺X⁻ (11)

wherein
- R¹: is a benzyl group,
- R²: is a linear C₁₀ to C₂₀ saturated or unsaturated hydrocarbon group, and
- X: is defined as above.

According to a preferred embodiment, R¹ is benzyl, R² is a linear C₁₂-C₁₈ saturated or unsaturated hydrocarbon group, and X⁻ is chloride.

Another quaternary ammonium compound preferred for use in the present invention corresponds to the formula

(R¹R²N(CH₃)((CH₂CH₂O)ₙH)]⁺X⁻ (12)

wherein
- R¹: is a C₆-C₂₀ hydrocarbon group, particularly linear or branched, substituted or unsubstituted alkyl group or a C₆-C₂₀ substituted or unsubstituted aryl group,
- R²: is a hydrocarbon group, particularly a C₁-C₂₀ linear or branched, substituted or unsubstituted alkyl group or a C₆-C₂₀ substituted or unsubstituted aryl group,
- n: is an integer from 1 to 5, and
- X: is defined as above.

Preferably,
- R¹ and R²: are linear or branched C₈-C₁₀ substituted or unsubstituted alkyl or aryl groups and more preferably are decyl.
- X⁻: is preferably chloride.

Another preferred quaternary ammonium compound corresponds to the formula

[R¹R²R³(CH₃)N]⁺X⁻ (13)

wherein
- R¹, R² and R³: independently are linear or branched C₆-C₂₀ saturated or unsaturated hydrocarbon groups.

More preferably
- R¹, R² and R³: independently are linear or branched C₈-C₁₀ saturated or unsaturated hydrocarbon groups.
- X: is preferably chloride.

The composition according to this invention is added to ores in an amount of 100 to 5000, preferably 200 to 4000 g/tons of ore.

All percentages in this specification mean weight percent, unless noted otherwise.

### Examples

Froth flotation experiments were conducted using a Denver laboratory flotation cell. Around 0.4 kg of ground ore was conditioned (1200 rpm) with 0.6 liters of water (solid pulp 40 %). The collector was added and 1.6 l of water was added to adjust the cell flotation water content (solid pulp 15 %). The pH was adjusted to 9.5 and the mixture was stirred for 2 minutes. The air intake was opened and the ore was floated during 5 minutes, obtaining the rougher concentrated and tailings. The products obtained were transferred to a tray and dried at 105 ± 5 °C, following to be weighed and analyzed to determine the magnesium oxide and calcium oxide grade.

The solid pulp comprises the solid mass percentage in function of total mass percentage (solid + water) at the flotation cell.

Description of the Cylinder Foam Test: For foam stability evaluation 100 ml of the inventive emulsion were prepared and transferred to a measured cylinder of 500 ml capacity. The cylinder was shaken 10 times in a 180° movement. After the 10^{th} movement, the chronometer was started and the foam height was measured at the start and every minute for 5 minutes. This cylinder foam test was also performed in the presence of ore simulating the pulp solid content.

Description of the Ross Miles Test (ASTM D1173/1980): In the Ross miles graduated column (1 m height) the inventive emulsion was added to reach the 0.0 ml demarcation. Another aliquot was transferred to the ampoule (200 ml) and coupled at the top of the graduated column. Then the liquid was release from the ampoule for free fall. The chronometer is started after the total liquid fell and the foam height is checked at the start and every minute for 5 minutes.

### Inventive composition preparation:

The quaternary ammonium compound is heated to a temperature of 50 °C until all solids are molten, and is homogenized. Some homogenized quaternary ammonium compound is weighed into a beaker at 25 °C and the antifoam is added while stirring at around 100 rpm. Then, the solvent is added slowly while stirring for 30 minutes until complete homogenization is achieved. The obtained composition is clear and of yellowish colour.

Materials used:

| | |
|---|---|
| Praepagen® WB | = Distearyl dimethyl ammonium chloride (Clariant S/A) |
| Flotigam® K2C | = Dimethyl Dicocoalkyl Ammonium Chloride (Clariant S/A) |
| Genamin® T 150 | = Alkylamine ethoxylated (Clariant S/A) |
| Detalp® 360 | = Alkyl benzenes (Deten Quimica S/A) |
| Isocer® NL | = Paraffinic oil (Isogama) |

### Example 1

Inventive composition 1 (table 1) was compared with a standard product in a froth flotation test. The standard product is believed to comprise a dicoco dimethyl quaternary ammonium salt solved in isopropanol. It does not contain a defoamer.

**Table 1: Inventive Composition 1 for flotation test evaluation**

| Composition | content (wt.-%) | Chemical compound |
|---|---|---|
| 1 | 42 | Praepagen WB |
| | 10 | Detalp 360 |
| | 5 | Nonylphenol-4EO |
| | 34 | Ethanol |
| | 9 | Water |

The flotation test results are presented at table 2, in which the inventive composition 1 presents a higher calcium recovery with a MgO content below 5.5 wt.-%, compared with the standard product results.

**Table 2: Flotation performance comparison test**

| Composition | Dosage (g/ton) | % MgO | CaO - Recovery (%) |
|---|---|---|---|
| 1 | 300 | 4.90 | 83.4 |
| standard product | 300 | 4.23 | 77.0 |
| 1 | 400 | 4.76 | 78.9 |
| standard product | 400 | 4.40 | 72.8 |

The foam tests were conducted comparing the composition 1 and standard product. The results (table 3) shows a lower foam in the presence of the antifoam agent.

**Table 3: Foam height test comparing composition 1 and standard product.**

| Time (min) | Foam Height (ml) | | | | | |
|---|---|---|---|---|---|---|
| Foam Test | Ross Miles | | Cylinder (without ore) | | Cylinder (with ore) | |
| Composition | 1 | Standard | 1 | Standard | 1 | Standard |
| Instant | 50.0 | 232.5 | 27.5 | 185.0 | 13.3 | 133.3 |
| 0.5 | 22.5 | 230.0 | 22.5 | 185.0 | 13.3 | 133.3 |
| 1 | 17.5 | 230.0 | 17.5 | 185.0 | 13.3 | 133.3 |
| 2 | 15.0 | 230.0 | 15.0 | 185.0 | 11.6 | 131.6 |
| 3 | 15.0 | 230.0 | 12.5 | 182.5 | 11.6 | 130.0 |
| 4 | 15.0 | 227.5 | 10.0 | 182.5 | 10.0 | 130.0 |
| 5 | 15.0 | 227.5 | 10.0 | 182.5 | 10.0 | 130.0 |

It can be concluded that composition 1 presents a lower foam formation and higher calcium recovery than the standard product.

### Example 2

Inventive composition 2 was compared with the composition 2-A (both as defined in table 4) in a froth flotation test. The flotation test results are presented at table 5, in which emulsion composition 2 presents a slightly higher calcium recovery with a MgO content in both cases below 5.5 wt.-%.

**Table 4: Composition 2 and 2-A for flotation test evaluation**

| Composition | Formulation (%) | Chemical compound |
|---|---|---|
| 2 | 42 | Praepagen WB |
| | 10 | Detalp 360 |
| | 5 | Nonylphenol-4EO |
| | 10 | 2-Ethylhexanol |
| | 15 | Ethanol |
| | 18 | Water |
| 2-A | 42 | Praepagen WB |
| | 10 | Detalp 360 |
| | 5 | Nonylphenol-4EO |
| | 10 | Isocer NL |
| | 33 | Ethanol |

Composition 2-A avoids the use of 2-Ethylhexanol for odor reasons. 2-Ethylhexanol is replaced by the paraffin Isocer.

**Table 5: Flotation performance comparison test**

| Composition | Dosage (g/ton) | % MgO | CaO - Recovery (%) |
|---|---|---|---|
| 2 | 200 | 5.75 | 85.0 |
| 2-A | 200 | 5.70 | 86.0 |
| 2 | 500 | 5.19 | 85.0 |
| 2-A | 500 | 5.33 | 86.0 |

It becomes apparent that the replacement of 2-Ethylhexanol by a paraffin does not impede the utility of the claimed invention.

### Example 3

The cylinder foam tests were conducted comparing the quaternary ammonium compound in its pure form (comparative) and in the inventive form together with antifoam (compositions see Table 6). The results show a lower foam in the presence of the antifoam agent (composition 3-A, 4-A and 5-A). Both tests with and without ore presented a lower foam, in the presence of the antifoam agent (table 7 and 8).

**Table 6: Foam test products composition and solution percentage**

| Composition | Solution (%) | Chemical compound |
|---|---|---|
| 3 (comp.) | 0.350 | Flotigam K2C |
| 3-A | 0.350 | Flotigam K2C |
| | 0.115 | Detalp 360 |
| | 0.050 | Nonylphenol-4EO |
| 4 (comp.) | 0.350 | Praepagen WB |
| 4-A | 0.350 | Praepagen WB |
| | 0.061 | Detalp 360 |
| | 0.030 | Nonylphenol-4EO |
| | 0.061 | 2-Ethyl Hexanol |
| 5 (comp.) | 0.257 | Flotigam K2C |
| | 0.092 | Genamin T 150 |
| 5-A | 0.257 | Flotigam K2C |
| | 0.092 | Genamin T 150 |
| | 0.107 | Detalp 360 |
| | 0.045 | Nonylphenol-4EO |

**Table 7: Cylinder foam height test in the presence of the ore**

| Time (min) | Cylinder (with ore) - Foam Height (ml) | | | | | |
|---|---|---|---|---|---|---|
| Composition | 3 | 3-A | 4 | 4-A | 5 | 5-A |
| Instant | 82.5 | 47.5 | 22.5 | 15.0 | 170.0 | 157.5 |
| 0.5 | 80.0 | 47.5 | 22.5 | 15.0 | 170.0 | 157.5 |
| 1 | 77.5 | 47.5 | 22.5 | 15.0 | 170.0 | 157.5 |
| 2 | 77.5 | 47.5 | 22.5 | 15.0 | 167.5 | 157.5 |
| 3 | 77.5 | 47.5 | 22.5 | 15.0 | 167.5 | 155.0 |
| 4 | 77.5 | 47.5 | 22.5 | 15.0 | 167.5 | 155.0 |
| 5 | 75.0 | 47.5 | 22.5 | 15.0 | 167.5 | 155.0 |

**Table 8: Cylinder foam height test without the ore**

| Time (min) | Cylinder (without ore) - Foam Height (ml) | | | | | |
|---|---|---|---|---|---|---|
| Composition | 3 | 3-A | 4 | 4-A | 5 | 5-A |
| Instant | 67.5 | 45.0 | 32.5 | 20.0 | 135.0 | 120.0 |
| 0.5 | 67.5 | 45.0 | 30.0 | 20.0 | 135.0 | 120.0 |
| 1 | 67.5 | 45.0 | 30.0 | 20.0 | 135.0 | 115.0 |
| 2 | 67.5 | 45.0 | 30.0 | 20.0 | 135.0 | 110.0 |
| 3 | 67.5 | 42.5 | 27.5 | 17.5 | 130.0 | 105.0 |
| 4 | 67.5 | 40.0 | 27.5 | 15.0 | 127.5 | 102.5 |
| 5 | 67.5 | 40.0 | 27.5 | 15.0 | 125.0 | 102.5 |

### Example 4

The Ross Miles foam tests were conducted comparing the foaming properties of quaternary ammonium compounds in absence of ore, with and without the presence of an antifoam agent (table 6). The results (table 9) shows a lower foam in the presence of the antifoam agent (composition 4-A and 5-A).

**Table 9: Ross Miles foam height test without the ore**

| Time (min) Composition | Ross Milles (without ore) - Foam Height (ml) | | | |
|---|---|---|---|---|
| | 4 | 4-A | 5 | 5-A |
| Instant | 47.5 | 35.0 | 252.5 | 240.0 |
| 0.5 | 47.5 | 32.5 | 252.5 | 240.0 |
| 1 | 47.5 | 32.5 | 252.5 | 240.0 |
| 2 | 47.5 | 30.0 | 252.5 | 240.0 |
| 3 | 47.5 | 30.0 | 252.5 | 240.0 |
| 4 | 47.5 | 25.0 | 252.5 | 240.0 |
| 5 | 47.5 | 25.0 | 252.5 | 240.0 |

## Claims

1. Composition, comprising
A) at least one quaternary ammonium compound which is a collector for the reverse flotation of magnesium minerals from calcium carbonate,
B) at least one antifoam agent selected from the group consisting of at least one ethoxylated alcohol corresponding to the formulae (6) and (7)
R-O-(A-O)ₙ-H (6)
R-O-(A-O)ₙ-(B-O)ₘ-H (7)
wherein
n is a number from 1 to 30
m is a number from 1 to 30
A is a C₂- to C₄-alkylene group
B is a C₂- to C₄-alkylene group
R is a C₆- to C₃₀-hydrocarbon group, and
C) at least one solvent.

2. Composition according to claim 1, wherein the quaternary ammonium compound corresponds to formula (8)
[R¹R²R³R⁴N]⁺X⁻ (8)
wherein
R¹, R², R³ and R⁴ independently from each other are hydrocarbon groups containing 1 to 30 carbon atoms, with the proviso that at least one of R¹, R², R³ and R⁴ contains between 6 and 20 carbon atoms, and
X is selected from chloride, carbonate, bicarbonate, nitrate, bromide, acetate or carboxylate.

3. Composition according to claim 2, wherein the total number of carbon atoms contained in R¹, R², R³ and R⁴ is from 9 to 35.

4. Composition according to claims 2 and/or 3, wherein the quaternary ammonium compound corresponds to formula (9)
[R¹(CH₃)₃N]⁺X⁻ (9)
wherein R¹ is a C₆-C₂₀ hydrocarbon group.

5. Composition according to claims 2 and/or 3, wherein the quaternary ammonium compound corresponds to formula (10)
[R¹R²(CH₃)₂N]⁺X⁻ (10)
wherein both R¹ and R² are C₆-C₂₀ hydrocarbon groups.

6. Composition according to claims 2 and/or 3, wherein the quaternary ammonium compound corresponds to formula (11)
[R¹R²(CH₃)₂N]⁺X⁻ (11)
wherein R¹ is a benzyl group and R² is a linear C₁₀ to C₂₀ hydrocarbon group.

7. Composition according to claims 2 and/or 3, wherein the quaternary ammonium compound corresponds to formula (12)
[R¹R²N(CH₃)((CH₂CH₂O)ₙH)]⁺X⁻ (12)
wherein both R¹ and R² are independently a C₆-C₂₀ hydrocarbon group, and n is an integer from 1 to 5.

8. Composition according to claims 2 and/or 3, wherein the quaternay ammonium compound corresponds to formula (13)
[R¹R²R³(CH₃)N]⁺X⁻ (13)
wherein R¹, R² and R³ independently are linear or branched C₆-C₂₀ saturated or unsaturated hydrocarbon groups.

9. Composition according to one or more of claims 1 - 8, wherein X is chloride.

10. Composition according to one or more of claims 1 - 9, wherein the amount of component A is from 20 to 60 wt.-%.

11. Composition according to one or more of claims 1 - 10, wherein the amount of component B is from 5 to 25 wt.-%.

12. Composition according to one or more of claims 1 - 11, wherein the amount of component C is from 15 to 75 wt.-%.

13. Composition according to one or more of claims 1 - 12, wherein the solvent is selected from the group consisting of water, ethanol, isopropanol, 2-ethylhexanol and paraffin, or mixtures thereof.

14. Composition according to claim 1, wherein n and m independently are numbers from 2 to 10.

15. Composition according to claim 1, wherein R is selected from alkyl and alkenyl groups.

16. Composition according to claim 1, wherein formula (6) denotes a polyoxyalkylene homopolymer or a polyoxyalkylene random copolymer.

17. Composition according to claim 1, wherein formula (7) denotes a polyoxyalkylene block copolymer.

18. Composition according to claim 1, wherein A is a C₂-alkylene group and B is a C₃- or C₄-alkylene group.

19. Use of the composition according to one or more of claims 1 - 18 as flotation reagent in the reverse flotation of magnesium silicate minerals from calcium carbonate ore.

20. Process for reversely flotating magnesium silicate minerals from calcium carbonate ore, the process comprising adding the composition according to one or more of claims 1 - 18 to a flotation cell containing magnesium silicate minerals and calcium carbonate ore, subsequently flowing air through the flotation cell and removing the magnesium silicate minerals with the foam so generated.
